# EUROPEAN PATENT APPLICATION

(11) **EP 1 688 249 A2**
(43) Date of publication of application: **09.08.2006**
(21) Application number: 06101266.2
(22) Date of filing: 03.02.2006
(51) Int. Cl.: B32B 29/00, A47G 11/00

(54) **Double-layered wrapping paper**

(30) Priority: 04.02.2005 IT FI20050018; 15.03.2005 IT FI20050025 U
(71) Applicant: Toscocarta S.P.A., 55060 Coselli (IT)
(72) Inventor: Papeschi, Goffredo, 55012, VORNO (IT)
(74) Representative: Gervasi, Gemma

(57) **Abstract**

Double-layered wrapping sheet wherein the decorative patterns are obtained without ink or by completely isolating the ink from external contacts.
The wrapping sheet consists of a sheet of paper cold bonded to a polymeric film, transparent paper, or cellophane wherein the bonding is achieved using coloured glue which is distributed so as to reproduce a graphic design or any other distinguishing pattern, or wherein said sheet of paper, polymeric film, transparent paper, or cellophane has a surface printed with ink and said bonding is achieved by applying said sheet of paper, polymeric film, transparent paper, or cellophane with the use of transparent glues.

## Description

### Field of the invention

The present invention refers to the field of wrapping paper and in particular to that intended for alimentary applications.

### Background art

Forms of wrapping paper consisting of a sheet of paper combined with a film of polymeric or other material that increases resistance, in particular in relation to damp or wet products, are widely known.

This form of paper is realised by means of cold bonding a sheet of paper and a film of polymeric material, with the adherence between the two materials achieved through the application of an appropriate glue.

For aesthetic reasons and for advertising purposes wrapping papers of the above types are often printed with decorative patterns or advertising symbols (for example, retail trademarks).

The printing is carried out on the paper sheet on the opposite side to that of the application of the polymeric film, because it is necessary to avoid, as far as possible, the ink coming into contact with whatever is wrapped in the paper, but it is obvious that the isolation of the ink from the package contents can never be fully guaranteed (given that the paper is often folded and/or doubled over) and consequently there is always the possibility of the ink accidentally coming into contact with the contents of the package.

Another consideration is that the above wrapping products require the application of both ink (for printing) and glue (to adhere the paper layer to the polymeric layer) with obvious production costs and complications.

It would clearly be advantageous to develop wrapping paper that resolves the above problems.

### Detailed description of the invention

The present invention resolves the problems of printed double-layered wrapping paper, eliminating the problems associated with the presence of ink.

In the first preferred embodiment of the invention the wrapping paper is realised through the use of coloured glues that offer the double function of providing adherence between the paper and polymeric sheets as well as reproducing the required decorative patterns.

By way of the invention the wrapping paper therefore consists of a sheet of paper cold bonded with a polymeric sheet, transparent paper, or cellophane in which the adhesion is achieved using coloured glues distributed so as to reproduce an image or any distinguishing pattern as required.

The films used are those conventionally applied for this purpose, for example polythene, polyethylene, polypropylene, transparent paper, or cellophane.

The film thickness can be varied as required, and can be transparent, semi-transparent, translucent, and also uncoloured, or coloured with natural pigments (free of potentially harmful substances like lead chromates) that nevertheless leave the underlying paper sheet visible.

The glues used for creating the double-layered material in question can be vinylic, based on formaldehyde, carboxymethylcellulose, etc., water soluble and semi-liquid in form. These will be applied using flexographic printing units and distributed over the film in the appropriate quantity in order to achieve the double purpose of bonding the support paper to the film and simultaneously printing the double-layered material produced with decorative patterns or graphic symbols.

The colour is prepared by mixing natural pigments and titanium dioxide diluted in water and alcohol. Once the correct colour mixture is ready this is added to the glue until the required shade and effect is achieved.

According to the other preferred embodiments reported above, the paper sheets or, respectively the polymer sheet, have one surface printed with ink using conventional methods and a polymeric film or a paper sheet, as described above, applied to this printed surface using traditional transparent glues; therefore, also in this case, whatever contact with the ink is avoided.

In the case of the polymer film, if desired, the printing can obviously be relised also on the surface of the film opposite to the one glued to the paper sheet when the avoiding of the ink is not particularly essential (for example when the final product is not used in connection with foods or similar).

The procedures for the production of the double-layered wrapping paper of the invention are those already known and applied in the production of the similar double-layered sheets of existing types.

In particular when the printing of, for example, decorative patterns or advertising symbols, is realised (as said above according to the second preferred embodiment) on the polymer sheet instead of on the paper sheet as said above, obviously the printing will be performed on the side of the polymer sheet which will be glued on to the paper sheet or on the opposite side.

The double-layered sheets realised by the invention can be used in complete safety for wrapping any type of product, especially foodstuffs, but they can also be variously applied for making tablecloths and covering sheets (for example for tables, cars, etc.) and in general for any type of covering that requires water resistance and when the presence of decorative patterns or distinguishing symbols is welcomed or necessary.

In particular the tablecloths, covering sheets and in general the covering that requires water resistance as above said are manufactured according to the methods known and applied for the preparation of double-layered sheets of known type used as wrapping paper and in particular for foodstuffs.

In general the glues are applied to the film using flexographic printing units, or other known systems, in appropriate quantities to adhere the paper support to the film followed by hot or cold pressing and/or embossing.

If preferred, the embossing can be carried out with incised cylinders, and in particular with the Simec - S205© pattern, which lends the product of the invention a characteristic fabric effect.

Alternatively, the double-layered sheets can be produced using the method for hot polythene coating of paper by extrusion.

Once the double-layered sheet has been formed the tablecloths can be cut to size as required in a traditional square shape, rectangular, or variously shaped in order to adapt to different surfaces (round, elliptical, etc.).

If required, the edge can be reinforced with a hem formed either by applying a border of suitable material (plastic paper) or simply by folding back a flap around the edge and adhering the same with glue or by pressing or embossing, possibly hot.

The tablecloths produced by way of the invention have all the advantages of a double-layered sheet (including water resistance) and can easily be adapted for covering any surfaces, also providing pleasing aesthetic results at an extremely limited cost.

## Claims

1. Double-layered wrapping sheet wherein the decorative patterns are obtained without ink or by completely isolating the ink from external contacts.

2. Wrapping sheet according to claim 1 consisting of a sheet of paper cold bonded to a polymeric film, transparent paper, or cellophane wherein the bonding is achieved using coloured glue which is distributed so as to reproduce a graphic design or any other distinguishing pattern.

3. Sheet as per claim 2 in which the polymeric film is a film in polythene, polyethylene, polypropylene, transparent paper, or cellophane.

4. Sheet as per claim 3 in which said film is transparent, semi-transparent, or translucent.

5. Sheet as per claim 4 in which said film is uncoloured or coloured but in any case permits the underlying paper sheet to be seen.

6. Sheet as per claim 1 - 5 in which said glues are vinylic, based on formaldehyde, carboxymethylcellulose, etc., water soluble and semi-liquid in form.

7. Sheet as per claim 6 in which the coloured glues are prepared by adding to the glue a mixture of natural colouring pigments and titanium dioxide diluted in water and alcohol in adequate quantities to achieve the required shade and effect.

8. Method for the preparation of sheets as per claims 1 - 7 in which the glue is applied with flexographic printing units and is distributed on the film in the appropriate quantity in order to achieve the double purpose of adhering the paper support and film together and simultaneously decorating the double-layered material created with decorative patterns or distinguishing symbols.

9. Wrapping sheet consisting of a sheet of paper cold bonded with a polymeric film, transparent paper, or cellophane when said sheet of paper has a surface printed with ink and in which said bonding is achieved by applying said polymeric film, transparent paper, or cellophane to the printed surface with the use of transparent glues.

10. Wrapping sheet consisting of a sheet of paper cold bonded with a polymeric film, transparent paper, or cellophane wherein said sheet of polymeric film, transparent paper, or cellophane has a surface printed with ink and in which said bonding is achieved by applying said polymeric film, transparent paper, or cellophane to said paper sheet with the use of transparent glues

11. Sheet as per claims 1 - 7 and 9 - 10 for the wrapping of alimentary products.

12. Tablecloths, covering sheets, surfacing that requires water resistance, consisting of sheets as per claims 1 - 7 and 9 - 11.

13. Tablecloths and similar according to claim 12 square, rectangular or otherwise shaped.

14. Tablecloths and similar according to 12 - 13 including a reinforcement hem along the edges.

15. Tablecloths according to claim 14 in which said hem is achieved through the application of a strip of material suitable for the purpose or by simply folding back a flap of material along the edge and adhering it to the rest of the sheet either by gluing or pressing, possibly hot.

16. Method for the production of tablecloths according to claims 12 - 15 in which:
- the double-layered sheet is prepared by applying the glue onto the film using flexographic printing units or other known systems in the quantities appropriate in order to adhere the paper support to the film followed by hot or cold pressing and/or embossing;
- once the double-layered sheet has been formed the tablecloths are cut into the required shapes and sizes.

17. Method for the production of tablecloths and similar according to claim 16 by means of hot polythene coating of the paper by extrusion followed by embossing and cutting of the tablecloths to the required shapes and sizes.

18. Method for the production of tablecloths and similar as per claim 17 in which the embossing is carried out with cylinders incised with the pattern Simec S205© .
